# EUROPÄISCHE PATENTANMELDUNG

(11) **EP 2 423 367 A2**
(43) Veröffentlichungstag der Anmeldung: **29.02.2012**
(21) Anmeldenummer: 11177352.9
(22) Anmeldetag: 12.08.2011
(51) Int. Cl.: D06F 33/02, A47L 15/46

(54) **Haushaltsgerät sowie Steuermodul für ein solches Haushaltsgerät**

(30) Priorität: 26.08.2010 DE 102010039836
(71) Anmelder: BSH Bosch und Siemens Hausgeräte GmbH, 81739 München (DE)
(72) Erfinder: Rosenbauer, Michael Georg, 86756 Reimlingen (DE)

(57) **Zusammenfassung**

Die Erfindung betrifft ein Haushaltsgerät, insbesondere ein wasserführendes Haushaltsgerät, mit einer elektronischen Steuereinrichtung (1) zur Steuerung von zumindest einer Gerätekomponente (5) des Haushaltsgeräts, wobei das Haushaltsgerät Anschlussmittel zum Verbinden mit einer Netzanschlussleitung (11) zur Versorgung des Haushaltsgeräts mit elektrischer Energie aufweist, wobei das Anschlussmittel zusätzlich zumindest einen Schnittstellenkontakt (31) aufweist. Erfindungsgemäß ist vorgesehen, dass bei kontaktiertem Schnittstellenkontakt (31) Stromtarifinformationen vom Energieversorger (12) zur Steuereinrichtung (1) leitbar sind.

## Beschreibung

Die Erfindung betrifft ein Haushaltsgerät, insbesondere ein wasserführendes Haushaltsgerät, mit einer elektronischen Steuereinrichtung zur Steuerung von zumindest einer Gerätekomponente des Haushaltsgeräts, wobei das Haushaltsgerät Anschlussmittel zum Verbinden mit einer Netzanschlussleitung zur Versorgung des Haushaltsgeräts mit elektrischer Energie aufweist, wobei das Anschlussmittel zusätzlich zumindest einen Schnittstellenkontakt für ein Steuermodul aufweist.

Bekanntermaßen setzen Energieversorgungsunternehmen Rundsteueranlagen ein, um Steuerbefehle an Betriebsanlagen zu geben, die auch in den Nachtstunden arbeiten, etwa Betriebsanlagen im Stahlbau oder in der Landwirtschaft. Mit einer solchen Rundsteueranlage können geeignete Verbraucher im Energieversorgungsnetz eines Energieversorgungsunternehmens in Fernsteuerung ein- oder ausgeschaltet werden. Auf diese Weise erfolgt eine Laststeuerung, bei der diese Verbraucher während der Schwachlastperioden im Energieversorgungsnetz betrieben werden, wodurch Lastspitzen während der Hauptbelastungszeit vermieden werden können.

Auf diese Weise kann der Betriebsstart des Haushaltsgerätes, etwa einer Geschirrspülmaschine, zeitlich so gelegt werden, dass beispielsweise günstige Nachtstromtarife von Energieversorgungsunternehmen genutzt werden können.

Die Aufgabe der Erfindung besteht darin, ein Haushaltsgerät, bereitzustellen, mit dem günstige Stromtarife flexibler genutzt werden können.

Erfindungsgemäß ist vorgesehen, dass bei kontaktiertem Schnittstellenkontakt Stromtarifinformationen vom Energieversorger zur Steuereinrichtung leitbar sind. Somit stehen diese Informationen geräteseitig zur Verfügung und können einem Nutzer zur Auswahl angezeigt und/oder geräteseitig zur Optimierung verwendet werden. Die Kontaktierung des Schnittstellenkontakts kann durch das Anschlussmittel oder andere Elemente erfolgen, z. B. entsprechende Einsätze. Eine Übertragung der Stromtarifinformationen kann bevorzugter Weise drahtgebunden über den Schnittstellenkontakt selber oder auf anderem Wege erfolgen, z. B. drahtlos mittels elektromagnetischer Wellen oder durch optische Signale. Die Stromtarifinformationen selbst können über Rundsteuersignale, WLAN, Internet oder dergleichen übertragen werden.

Vorzugsweise ist vorgesehen, dass der Schnittstellenkontakt zur Bildung einer Signalverbindung zum Leiten der Stromtarifinformationen mit der Steuereinrichtung verbindbar ist. Dabei können die Anschlussmittel als Anschlussbuchse ausgebildet sein, die zur Energieversorgung des Haushaltsgeräts mit einem Stecker einer Netzanschlussleitung verbunden werden kann.

Das Funktionsprinzip der geräteseitigen Anschlussbuchse entspricht dem eines Kaltgerätesteckers, der in Doppelfunktion sowohl Netzkontakte für die Versorgungsspannung sowie für die Schutzerde als auch zusätzliche Schnittstellenkontakte aufweist, über die eine Kommunikation zwischen dem Energieversorger und der elektronischen Steuereinrichtung des Haushaltsgerätes bereitgestellt werden kann. Die Schnittstellenkontakte der geräteseitigen Anschlussbuchse können über Datenbusleitungen mit der Steuereinrichtung verbunden sein. In der Anschlussbuchse ist daher erfindungsgemäß neben der Netzkontaktierung zusätzlich auch eine Steuerungsschnittstelle integriert.

Bevorzugt kann das Steuermodul unmittelbar oder unter Zwischenschaltung einer entsprechenden Leitung an der geräteseitigen Anschlussbuchse angeschlossen werden. Dabei kann das Steuermodul werkzeugfrei als separates, nachrüstbares Bauteil außenseitig am Haushaltsgerät angebracht werden sowie davon gelöst werden. Das Steuermodul kann außerdem als ein Nachrüstteil optional vom Kunden nachgekauft und in das Haushaltsgerät eingebaut werden.

Bevorzugt kann das Steuermodul als externes Bauteil nicht gerätefern zwischen der Netzanschlussleitung und einer wandseitigen Steckdose angeordnet werden, sondern unmittelbar zwischen der Anschlussleitung und dem Haushaltsgerät in Reihe geschaltet sein.

Die erfindungsgemäße geräteseitige Anschlussbuchse mit ihren Schnittstellenkontakten kann alternativ auch im Rahmen der Geräteendmontage als Schnittstelle für die Geräteprogrammierung verwendet werden. Hierzu kann eine Programmiereinrichtung mit der geräteseitigen Anschlussbuchse kontaktiert werden, so dass die Geräteprogrammierung direkt über die Schnittstellenkontakte der Anschlussbuchse erfolgen kann.

Das Steuermodul kann einen Rundsteuersignalempfänger aufweisen. Mit dem Rundsteuersignalempfänger können Rundsteuersignale vom Stromversorger zur elektronischen Steuereinrichtung des Haushaltsgerätes übertragen werden, wodurch eine Fernsteuerung des Haushaltsgerätes durch die Rundsteueranlage eines Energieversorgungsunternehmens ermöglicht ist.

Die zur Fernsteuerung des Haushaltsgerätes empfangenen Rundsteuersignale können beispielhaft unterschiedliche Stromtarife betreffen, die der Energieversorger, an dessen Energieversorgungsnetz das Haushaltsgerät angeschlossen ist, anbietet. Die Steuereinrichtung des Haushaltsgerätes kann in Abhängigkeit vom empfangenen Rundsteuersignal einen Zeitraum für den Gerätebetrieb bestimmen, einen Gerätebetrieb beenden oder dessen Prozessparameter im laufenden Betrieb anpassen.

Um Freiheitsgrade mit Bezug auf die Gestaltung des Netzanschlusses des Haushaltsgerätes zu erhalten, kann die Netzanschlussleitung und/oder das Steuermodul sowie das Haushaltsgerät ein Stecksystem bilden, bei dem die Netzanschlussleitung, das Steuermodul und/oder das Haushaltsgerät in lösbarer Steckverbindung miteinander gekoppelt werden können.

In das oben genannte Stecksystem können zusätzlich zum Steuermodul auch weitere Adapter einfach durch Aufstecken integriert werden. Beispielhaft kann ein Powerline-Adapter für eine vom Haushaltsgerät entfernte Fernanzeige integriert werden. Alternativ oder zusätzlich kann ein Kundendienst-Adapter integriert werden, damit der Kundendienst Fehlerzustände im Haushaltsgerät erkennen kann.

Das Steuermodul kann an seiner dem Haushaltsgerät zugewandten Seite elektrische Kontakte für die Stromversorgung und auch zusätzliche elektrische Kontakte für die Übertragung von Steuersignalen aufweisen. Diese zusätzlichen Kontakte sind insbesondere an die Schnittstellenkontakte der Anschlussbuchse des Haushaltsgerätes anschließbar.

Demgegenüber kann das Steuermodul an seiner Netzseite elektrische Kontakte für den Anschluss des Steckers der Netzanschlussleitung aufweisen.

Das erfindungsgemäße Haushaltsgerät kann für den Kunden in einer Grundausführung und in einer erweiterten Ausführung bereitgestellt werden. In der Grundausführung des Haushaltsgerätes ist das Steuermodul weggelassen. Das heißt, dass in diesem Fall der Anschlussleitungs-Stecker an der Anschlussbuchse des Haushaltsgerätes unmittelbar angeschlossen ist, während keine Steuersignale von den Schnittstellenkontakten der Anschlussbuchse abgegriffen werden.

In der erweiterten Ausführung kann das Set bzw. das Gerätesortiment bestehend aus dem Haushaltsgerät und der Netzanschlussleitung mit dem Steuermodul erweitert sein, wodurch eine Fernsteuerung des Haushaltsgerätes mit Rundsteuersignalen ermöglicht ist.

Damit das Haushaltsgerät in seiner Grundausführung möglichst kostengünstig sowie mit möglichst einfacher Steuerelektronik ausstattbar ist, kann es von Vorteil sein, wenn das Ausfiltern, das Dekodieren sowie das Ableiten eines von der Steuereinrichtung verarbeitbaren Steuersignales nicht von der Haushaltsgeräteelektronik ausgeführt wird, sondern unmittelbar im Steuermodul erfolgen kann. Vor diesem Hintergrund kann das Steuermodul eine Auswerteeinheit aufweisen, der die oben ausgeführte Signalverarbeitung unabhängig von der Haushaltsgeräteelektronik erfolgen kann.

Nachfolgend ist ein Ausführungsbeispiel der Erfindung anhand der beigefügten Figuren beschrieben.

Es zeigen:
- Fig. 1: in einer Prinzipdarstellung einen stark vereinfachten Stromlaufplan des Haushaltsgerätes;

- Fig. 2: den Netzanschlussbereich des Haushaltsgerätes in einer erweiterten Ausführung mit zwischengeschaltetem Steuermodul;
- Fig. 3: den Netzanschlussbereich in Explosionsdarstellung;
- Fig. 4a und Fig. 4b: jeweils das Steuermodul in unterschiedlichen Ansichten;
- Fig. 5 und 6: jeweils den Netzanschlussbereich des Haushaltsgerätes in Grundausführung sowie mit eingesteckter und ausgesteckter Netzanschlussleitung.

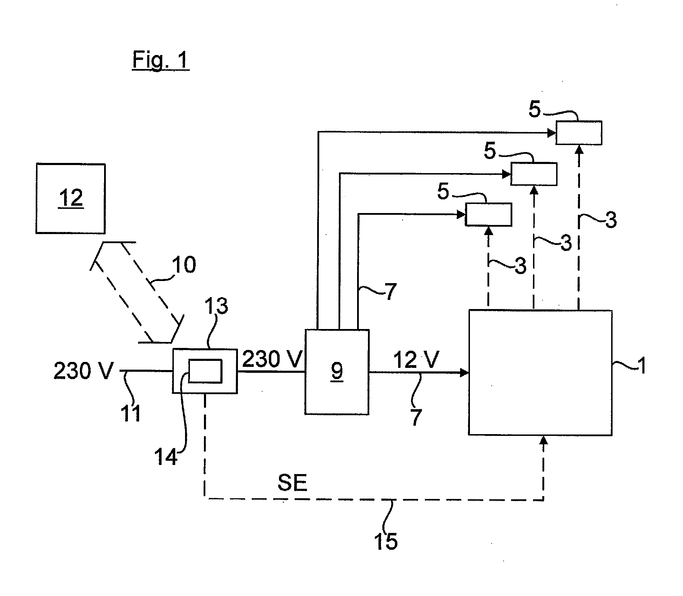

Wie aus der Fig. 1 hervorgeht, weist das Haushaltsgerät, im vorliegenden Ausführungsbeispiel ein wasserführendes Haushaltsgerät, eine elektronische Steuereinrichtung 1 auf, die über gestrichelt angedeutete Signalleitungen 3 unterschiedliche Gerätekomponenten 5 ansteuert. Im Falle z. B. einer Geschirrspülmaschine können dies unter anderem eine Umwälzpumpe, eine Wasserheizung oder ein Flüssigkeitsventil sein.
Die Gerätekomponenten 5 sowie die Steuereinrichtung 1 werden über Versorgungsleitungen 7 von einem Netzteil 9 mit Niederspannung versorgt. Das Netzteil 9 ist wiederum über eine Netzanschlussleitung 11 mit dem Stromversorgungsnetz in Verbindung.

Gemäß der Fig. 1 ist dem Netzteil 9 in Reihe ein Steuermodul 13 vorgeschaltet. Das Steuermodul 13 ist in einer bidirektionalen Signalverbindung 10 mit dem Energieversorger 12, an dessen Energieversorgungsnetz das Haushaltsgerät angeschlossen ist. Aufgrund der bidirektionalen Signalverbindung 10 kann das Steuermodul 13 einerseits Informationen über Stromtarife direkt vom Energieversorger 12 anfordern. Andererseits kann der Energieversorger 12 Netzinformationen zum Steuermodul 13 übertragen. Die bidirektionale Datenübertragung zwischen dem Steuermodul 13 und dem Energieversorger 12 kann zum Beispiel über Rundsteuersignale, WLAN, Internet oder dergleichen erfolgen.

In der Fig. 1 weist das Steuermodul 13 beispielhaft einen Rundsteuersignalempfänger mit einer Auswerteeinheit 14 auf, mit der ein Rundsteuersignal aus dem Stromversorgungsnetz ausgefiltert sowie dekodiert werden kann. Die Auswerteeinheit 14 kann dabei ein Steuersignal S_{E} ableiten, das über eine Signalverbindung 15 zur Steuereinrichtung 1 geleitet wird. Da Rundsteuersignale üblicherweise entsprechende Stromtarife vom Energieversorger 12 betreffen, erhält die Steuereinrichtung 1 über das Steuermodul 13 Steuerbefehle, auf deren Grundlage die Steuereinheit 1 den Haushaltsgeräte-Betrieb zu einem vorgegebenen Startzeitpunkt starten, beenden oder Prozessparameter im laufenden Betrieb anpassen kann.

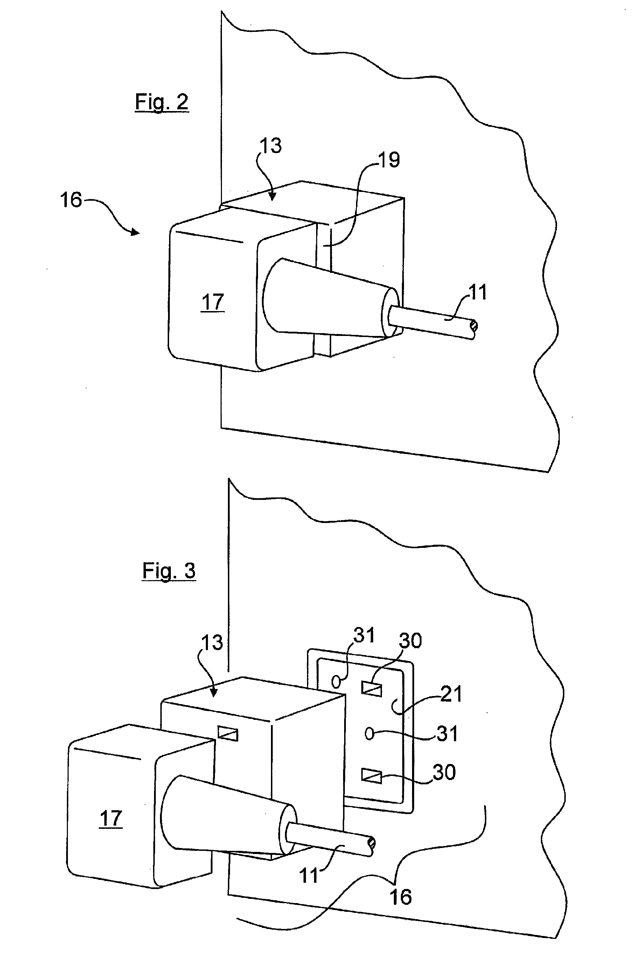

Das Steuermodul 13 ist gemäß den Fig. 2 bis 4 als ein vom Haushaltsgerät separater Zwischenadapter ausgeführt, der außenseitig am Netzanschlussbereich des Haushaltsgerätes anbringbar ist. Wie aus der Fig. 2 hervorgeht, ist die Netzanschlussleitung 11 nicht ortsfest in das Gehäuseinnere des Haushaltsgerätes geführt, sondern über ein Stecksystem 16 am Haushaltsgerät angeschlossen.

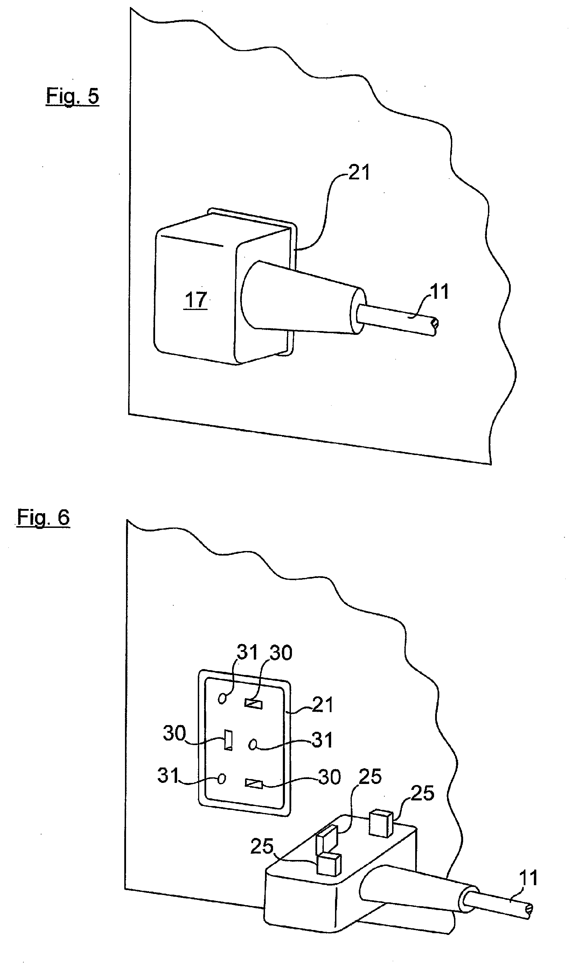

In dem Stecksystem 16 ist gemäß der Fig. 2 die Netzanschlussleitung 11 mit einem elektrischen Stecker 17 in die Steckerseite 19 des Steuermoduls 13 eingesteckt. Das Steuermodul 13 ist wiederum ebenfalls lösbar in eine als Anschlussmittel dienende elektrische Anschlussbuchse 21 eingesteckt, die geräterückseitig im unteren Eckbereich vorgesehen ist und in der Fig. 3 sowie in der später beschriebenen Fig. 6 gezeigt ist. Der elektrische Stecker 17, das Steuermodul 13 sowie die elektrische Anschlussbuchse 21 sind somit in das Stecksystem 16 integriert sowie werkzeugfrei miteinander verbindbar oder voneinander lösbar, wie es in der Explosionsdarstellung der Fig. 3 gezeigt ist.

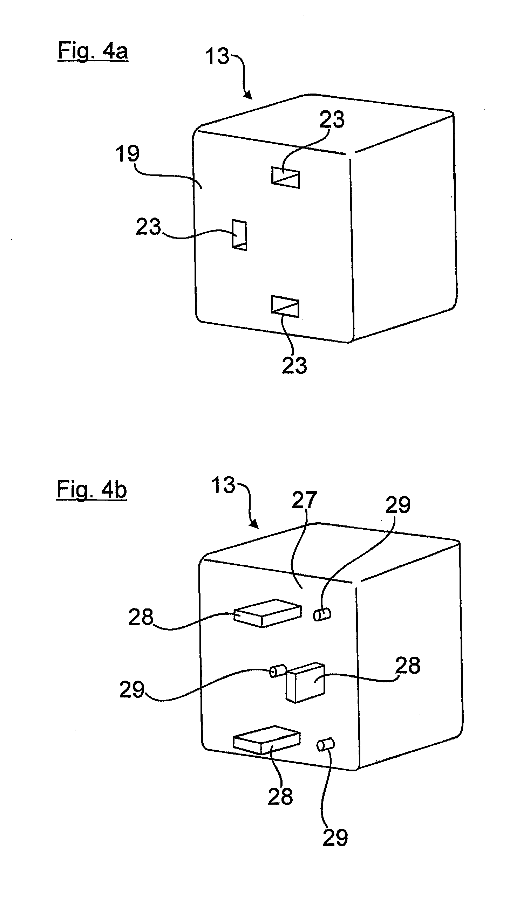

In den Fig. 4a und 4b ist das Steuermodul 13 jeweils in unterschiedlichen Ansichten gezeigt. So ist in der Fig. 4a die Netzseite 19 mit elektrischen Kontakten 23 gezeigt. In den elektrischen Kontakten 23 des Steuermoduls 13 sind die korrespondierenden elektrischen Kontakte 25 des Steckers 17 der Netzanschlussleitung 11 einsteckbar, die in der Fig. 6 gezeigt sind.

Gegenüberliegend zur Netzseite 19 weist das Steuermodul 13 an seiner Geräteseite 27 ebenfalls elektrische Kontakte 28 für die Stromversorgung auf. Zusätzlich weist die Geräteseite 27 elektrische Schnittstellenkontaktstifte 29 auf. Sowohl die Stromversorgungskontakte 28 als auch die Schnittstellenkontaktstifte 29 des Steuermoduls 13 sind mit korrespondierenden Kontakten 30, 31 der Anschlussbuchse 21 verbindbar. Die Schnittstellenkontakte 31 der elektrischen Anschlussbuchse 21 sind dabei über die in der Fig. 1 gezeigte Signalleitung 15, etwa eine oder mehrere Datenbusleitungen, mit der Steuereinrichtung 1 in Verbindung, während die Stromversorgungskontakte 31 mit dem Netzteil des Haushaltsgerätes in Verbindung sind.

Die Schnittstellenkontakte 31 der Anschlussbuchse 21 können beispielhaft eine Eindrahtschnittstelle bilden, wobei die Schnittstellenkontakte 31 als Versorgungsspannungskontakt, als Bezugspotentialkontakt und als Datenleitungskontakt ausgebildet sein können.

Im gezeigten Ausführungsbeispiel ist das Steuermodul 13 ein Nachrüstteil, das optional vom Gerätesortiment mitumfasst sein kann oder nachträglich in das Gerätesortiment nachgerüstet werden kann.

So zeigen die Fig. 5 und 6 das Gerätesortiment in einer Grundausführung, in der das Steuermodul 13 weggelassen ist. In diesem Fall ist der Stecker 17 der Netzanschlussleitung 11 unmittelbar mit seinen elektrischen Anschlüssen 25 in die korrespondierenden Stromversorgungsanschlüsse 30 der Anschlussbuchse 21 gesteckt. Den Schnittstellenkontakten 31 der elektrischen Anschlussbuchse 21 wird demgegenüber kein Signal zugeführt.

Bei einer optionalen Nachrüstung kann das in den Fig. 5 und 6 gezeigte Gerätesortiment mit dem Steuermodul 13 erweitert werden. Eine solche erweiterte Ausführung ist in den Fig. 2 und 3 gezeigt. Wie bereits oben erwähnt, ist in dieser erweiterten Ausführung das Steuermodul 13 zwischen dem Stecker 17 der Netzanschlussleitung 11 und der elektrischen Anschlussbuchse 21 des Haushaltsgerätes zwischengeschaltet. Bei einer solchen Nachrüstung mit dem Steuermodul 13 kann die Steuereinrichtung 1 beispielsweise nur durch ein Software-Update angepasst werden, um die auf der Grundlage der empfangenen Rundsteuersignale den Haushaltsgerätebetrieb entsprechend zu steuern. **BEZUGSZEICHENLISTE**
- 1: elektronische Steuereinrichtung
- 3: Signalleitungen
- 5: Gerätekomponenten
- 7: Stromversorgungsleitungen
- 9: Netzteil
- 10: bidirektionale Signalverbindung
- 11: Netzanschlussleitung
- 12: Energieversorger
- 13: Steuermodul
- 14: Auswerteeinheit
- 15: Signalverbindung
- 16: Stecksystem
- 17: Stecker der Netzanschlussleitung 11
- 19: Netzseite des Steuermoduls 13
- 21: Anschlussbuchse
- 23 , 28: Stromversorgungskontakte des Steuermoduls 13
- 25: Stromversorgungskontakte des Steckers 17
- 27: Geräteseite des Steuermoduls 13
- 29: Schnittstellenkontakte des Steuermoduls 13
- 30: Stromversorgungskontakte der Anschlussbuchse 21
- 31: Schnittstellenkontakte der Anschlussbuchse 21

## Patentansprüche

1. Haushaltsgerät, insbesondere wasserführendes Haushaltsgerät, mit einer elektronischen Steuereinrichtung (1) zur Steuerung von zumindest einer Gerätekomponente (5) des Haushaltsgeräts, wobei das Haushaltsgerät Anschlussmittel zum Verbinden mit einer Netzanschlussleitung (11) zur Versorgung des Haushaltsgeräts mit elektrischer Energie aufweist, wobei das Anschlussmittel zusätzlich zumindest einen Schnittstellenkontakt (31) aufweist, **dadurch gekennzeichnet, dass** bei kontaktiertem Schnittstellenkontakt (31) Stromtarifinformationen vom Energieversorger (12) zur Steuereinrichtung (1) leitbar sind.

2. Haushaltsgerät nach Anspruch 1, **dadurch gekennzeichnet, dass** über den kontaktierten Schnittstellenkontakt (31) die Stromtarifinformationen leitbar sind.

3. Haushaltsgerät nach Anspruch 2, **dadurch gekennzeichnet, dass** der Schnittstellenkontakt (31) mit einem Steuermodul (13) zur Bildung einer Signalverbindung (15) zum Leiten der Stromtarifinformationen mit der Steuereinrichtung (1) verbindbar ist.

4. Haushaltsgerät nach Anspruch 3, **dadurch gekennzeichnet, dass** das Steuermodul (13) zwischen dem Anschlussmittel der Netzanschlussleitung (11) in Reihe schaltbar ist.

5. Haushaltsgerät nach Anspruch 2, 3 oder 4, **dadurch gekennzeichnet, dass** für eine im Rahmen der Geräteendmontage erfolgende Geräteprogrammierung eine Programmiereinrichtung mit dem geräteseitigen Anschlussmittel kontaktierbar ist, so dass die Geräteprogrammierung über den Schnittstellenkontakt (31) der Anschlussmittel erfolgt.

6. Haushaltsgerät nach einem der Ansprüche 3 bis 4, **dadurch gekennzeichnet, dass** das Steuermodul (13) in einer insbesondere bidirektionalen Signalverbindung (10) mit einem Energieversorger (12) bringbar ist.

7. Haushaltsgerät nach einem der Ansprüche 3 bis 6, **dadurch gekennzeichnet, dass** das Steuermodul (13) einen Rundsteuersignalempfänger (13) aufweist, mit dem Rundsteuersignale vom Stromversorger (10) zur Steuereinrichtung (1) übertragbar sind.

8. Haushaltsgerät nach einem der Ansprüche 3 bis 7, **dadurch gekennzeichnet, dass** die mittels der Signalverbindung (15) übertragenen Steuersignale jeweils Stromtarife vom Energieversorger (12) betreffen, und/oder die Steuereinrichtung (1) in Abhängigkeit vom empfangenen Steuersignal einen Betriebsstart des Haushaltsgerätes einstellt, den Betrieb beendet oder die Prozessparameter während des Betriebs anpasst.

9. Haushaltsgerät nach einem der Ansprüche 3 bis 8, **dadurch gekennzeichnet, dass** das Steuermodul (13) als ein gegenüber dem Haushaltsgerät separates Bauteil ausgebildet ist, das insbesondere am Haushaltsgerät nachrüstbar ausgebildet ist.

10. Haushaltsgerät nach einem der vorhergehenden Ansprüche, **dadurch gekennzeichnet, dass** die Netzanschlussleitung (11) und/oder das Steuermodul (13) zusammen mit dem Haushaltsgerät ein Stecksystem (16) bilden, in dem die Netzanschlussleitung (11) in einer lösbaren Steckverbindung unmittelbar oder unter Zwischenschaltung des Steuermoduls (13) am Haushaltsgerät anschließbar ist.

11. Haushaltsgerät nach einem der Ansprüche 3 bis 10, **dadurch gekennzeichnet, dass** das Steuermodul (13) an seiner dem Schnittstellenkontakt (31) zugewandten Geräteseite (27) elektrische Kontakte (28) für die Stromversorgung und Datenkontakte (29) für die Übertragung von Steuersignalen aufweist.

12. Haushaltsgerät nach Anspruch 11, **dadurch gekennzeichnet, dass** das Steuermodul (13) an seiner der Netzanschlussleitung (11) zugewandten Netzseite (19) elektrische Kontakte (23) für den Anschluss des Steckers (17) der Netzanschlussleitung (11) aufweist.

13. Haushaltsgerät nach einem der Ansprüche 7 bis 12, **dadurch gekennzeichnet, dass** der Rundsteuersignalempfänger (13) eine Auswerteeinheit (14) aufweist, die ein empfangenes Rundsteuersignal aus dem Netz ausfiltert und/oder dekodiert sowie daraus ein Steuersignal (S_{E}) für die Steuereinrichtung (1) ableitet.

14. Steuermodul für ein Haushaltsgerät nach einem der vorhergehenden Ansprüche.
